Europäisches Patentamt

European Patent Office

Office européen des brevets

(11) Veröffentlichungsnummer: **0 208 881**
**A1**

## (12) EUROPÄISCHE PATENTANMELDUNG

(21) Anmeldenummer: 86107135.5

(22) Anmeldetag: 26.05.86

(51) Int. Cl.⁴: **C10B 53/00 , C10K 3/00 , C10G 9/34**

(30) Priorität: 07.06.85 DE 3520440

(43) Veröffentlichungstag der Anmeldung:
**21.01.87 Patentblatt 87/04**

(84) Benannte Vertragsstaaten:
**AT BE CH DE FR GB IT LI LU NL SE**

(71) Anmelder: **KRAFTWERK UNION
AKTIENGESELLSCHAFT
Wiesenstrasse 35
D-4330 Mülheim (Ruhr)(DE)**

(72) Erfinder: **Hassmann, Klaus, Dr. Dipl.-Ing.
Dammstrasse 10
D-8523 Baiersdorf(DE)**
Erfinder: **Keller, Wolfgang, Dr.
Robert-Gradmann-Strasse 1
D-8520 Erlangen(DE)**
Erfinder: **Riedle, Klaus, Prof.Dr.
Ringstrasse 36d
D-8525 Uttenreuth(DE)**

(74) Vertreter: **Mehl, Ernst, Dipl.-Ing. et al
Postfach 22 01 76
D-8000 München 22(DE)**

(54) **Pyrolyseanlage.**

(57) Die Erfindung bezieht sich auf eine Pyrolyseanlage 40 mit einer Schweleinrichtung (48) zur Verschwelung der Einsatzstoffe zu einem sogenannten Pyrolyserestkoks und einem Schwelgas und einem der Schweleinrichtung gasseitig nachgeschalteten Gaswandler (52, 73) zur Umwandlung des Schwelgases in ein bedenkenlos verfeuerbares Spaltgas. Bei solchen Pyrolseanlagen besteht das Problem die Gesamtenergiebilanz zu verbessern und zugleich auch den technischen Aufwand zu verringern. Hierzu sieht die Erfindung vor, daß der Gaswandler ein Eisenbadvergaser (52, 53) ist, dem zur Temperierung Energie zugeführt wird und in dessen flüssigen Eisenschmelze (71,76) das Schwelgas eingedüst und Schadstoffbindemittel eingebracht werden. Desweiteren können dem Eisenbad verunreinigte Fremdgase zur thermischen Zerstörung bzw. chemischen Einbindung von mitgeführten Schadstoffen in die Eisenschmelze zugeleitet werden. Eine erfindungsgemäße Pyrolyseanlage ist insbesondere für den Einsatz zur umweltfreundlichen Aufarbeitung von Hausmüll, Industriemüll, Klärschlamm, Altreifen und Abfallstoffen aller Art geeignet.

FIG 2

0 208 881

1a

## Pyrolyseanlage

Die Erfindung bezieht sich auf eine Pyrolyseanlage mit einer Schweleinrichtung zur Verschwelung der Einsatzstoffe zu einem sogenannten Pyrolysereststoff und einem Schwelgas und einem der Schweleinrichtung gasseitig nachgeschalteten Gaswandler zur Umwandlung des Schwelgases in ein bedenkenlos verfeuerbares Spaltgas.

Es sind bereits Pyrolyseanlagen bekannt, bei denen Haus-Industrie -und Gewerbemüll sowie Klärschlämme unter Luftabschluß bei 450 bis 500°C einem Schwelprozeß unterzogen werden. Bei diesem Schwelprozeß findet eine Volumenreduktion des Mülls bzw. der Abfälle auf ca. 10% ihres ursprünglichen Volumens statt. Neben dem ohne weiteres deponierfähigen, stark kohlenstoffhaltigen Pyrolysereststoff fällt ein sogenanntes Schwelgas an, das wegen seines Schadstoffsanteils in den bekannten Pyrolyseanlagen in einem sogenannten Gaswandler gekrackt werden muß. Hierzu wird das Schwelgas in einem Gaswandler unter Zugabe geringer Sauerstoffmengen teilverbrannt und anschließend durch ein glühendes Koksbett gesaugt. Bei der Teilverbrennung und der Durchströmung des glühenden Koksbettes werden die Schadstoffmoleküle des Schwelgases gespalten und die Schwermetalle in reduzierter und wasserunlöslicher Form im Koksbett eingebunden. Das dem Gaswandler entströmende Spaltgas muß bei bekannten Pyrolyseanlagen gekühlt und in einer mehrstufigen Waschstrasse gereinigt werden, bevor es anderen Verbrauchern zugeführt werden kann. Es besteht im wesentlichen aus Stickstoff, Kohlenmonoxyd, Wasserstoff und geringen Anteilen an Kohlenwasserstoffen.

Infolge seines Heizwertes von ca. 5000 k-Joule pro Norm Kubikmeter ist es als Schwachgas zu bezeichnen.

Der Erfindung liegt die Aufgabe zugrunde, den Heizwert des Spaltgases soweit wie möglich zu erhöhen und zugleich den technischen Aufwand für die Umwandlung der eingesetzten Abfallstoffe in Spaltgas soweit wie möglich zu verringern.

Diese Aufgabe wird durch die Merkmale des Anspruchs 1 gelöst. Vorteilhafte Ausgestaltungen sind den Ansprüchen 2 bis 9 zu entnehmen.

Dadurch, daß die Schwelgase nicht mehr im Gaswandler teilverbrannt und anschließend durch ein glühendes Koksbett gezogen werden, sondern unmittelbar in einem Eisenbadvergaser eingedüst werden, entfällt der mit der Teilverbrennung ver-bundene Heizwertverlust. Die dem Eisenbadverga-ser somit entströmenden Spaltgase haben aus diesem Grunde einen wesentlich höheren Heizwert als jene, die dem Gaswandler in konventionellen Pyrolyseanlagen entströmen. Zugleich können dem Eisenbad Schadstoff-Bindemittel zugeführt werden, die mit dem eingedüsten Schwelgas reagieren und deren Schadstoffanteile an sich binden. Diese Bindemittel sammeln sich in der auf dem Eisenbad -schwimmenden Schlacke an und können sodann mit der Schlacke aus dem Eisenbad entfernt werden. Dabei werden nahezu sämtliche Schadstoffe, wie Schwefel, Fluor, sowie ein Teil Schwermetalle an die Schlacke gebunden und als Feststoff ausgeschleust.

Um ein Einfrieren des Eisenbades zu verhindern, kann der Eisenschmelze in vorteilhafter Weiterbildung der Erfindung auf elektrischem Wege Heizenergie zugeführt werden.

Dies kann in zweckmäßiger Weise über eine Induktionsheizung geschehen.

Es ist auch möglich, die benötigte Energie in einer weiteren Ausbildung der Erfindung auf chemischem Wege zuzuführen und die Eisenschmelze entweder durch indirekte Verbrennung eines Teils der gebildeten Spaltgase oder durch direkte Zuführung von gemahlenen Kohlenstoff und Sauerstoff in das Eisenbad aufzuheizen. In einer weiteren, vorteilhaften Ausgestaltung der Erfindung kann der Kohlenstoff dem Eisenbad als gemahlener Koks zugeführt werden. Es wäre aber auch möglich, hierfür einen aufgearbeiteten Teil des Pyrolysereststoffes aus der Schweltrommel zu verwenden. Im letztgenannten Fall kann die Zuführung von Fremdkoks stark vermindert, gegebenenfalls sogar ganz eingespart werden.

Weitere Einzelheiten der Erfindung werden anhand eines in den Figuren dargestellten Ausführungsbeispiels erläutert. Es zeigen:

Fig. 1 eine vorbekannte Pyrolyseanlage mit einem Gaswandler zur Hausmüllaufarbeitung,

Fig. 2 eine erfindungsgemäße Pyrolyseanlage mit einem Eisenbadvergaser und

Fig. 3 einen Querschnitt durch den Eisenbadvergaser der Fig. 2.

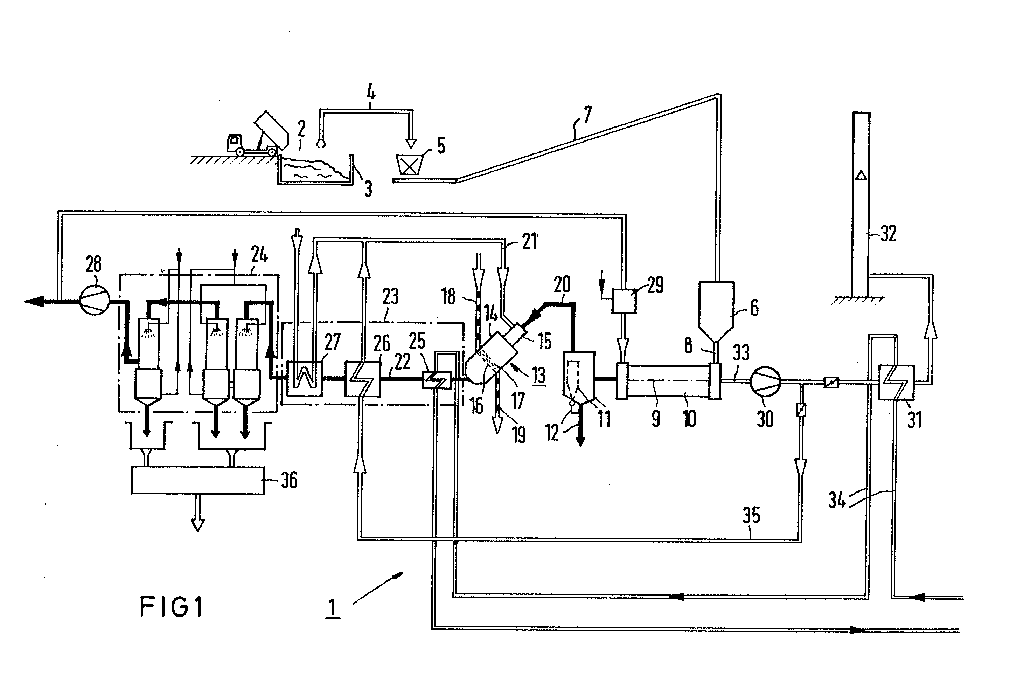

Die Fig. 1 zeigt anhand einer vorbekannten Pyrolyseanlage 1 den prinzipiellen Aufbau einer solchen Anlage. Bei dieser vorbekannten Pyrolyseanlage 1 sind mit 2 eine Müllannahme, mit 3 ein Tiefbunker und mit 4 ein Müllkran bezeichnet. Zur Zerkleinerung des angelieferten Mülls ist dem Müllkran 4 eine Rotorschere 5 zugeordnet. Dieser Rotorschere 5 schließt sich ein zu einem Vorbunker 6 führendes Müllförderungssystem 7 an. Der Vorbunker mündet in den Einfüllschacht 8 einer um ihrer Längsachse 9 rotierenden Schweltrommel 10. An der Schweltrommel 10 ist ausgangsseitig ein Staubabscheider 11 mit einem nachgeschalteten Reststoffaustragssystem 12 angeschlossen. Gasseitig ist dem Staubabscheider 11 ein Gaswandler 13 nachgeschaltet. Letzterer besteht im wesentlichen aus einem um annähernd 45° geneigt aufgestellten zylindrischen Gehäuse 14, auf dessen Oberseite ein Brennerkopf aufgesetzt ist. In der Mitte des Gaswandlers 13 befindet sich ein, dessen gesamten Querschnitt ausfüllender Rost 16 mit einem Koksbett 17. Am oberen Ende des Koksbettes ist eine Kokszuführungsleitung 18 und am unteren Ende eine Ascheabzugsleitung 19 vorgesehen. Am Brennerkopf 15 ist nicht nur die Schwelgasleitung 20, sondern auch eine weitere, ein sauerstoffhaltiges Gas zuführende Gasleitung 21 angeschlossen. In Gasströmungsrichtung hinter dem Koksbett 17 schließt sich eine Spaltgasleitung 22 an, die über eine Wärmetauscheranlage 23 zu einer kombinierten Gaskühl-und Waschstraße 24 führt. Die Wärmetauscheranlage 23 ist mit einem Abhitzedampferzeuger 25, einem Rauchgaswärmetauscher 26 und einem Luftvorwärmer 27 ausgerüstet.

Das die Gaskühl-und Waschstraße 24 verlassende Reingas wird hier im Ausführungsbeispiel über einen Reingasverdichter 28, den diversen Verbrauchern, u.a. auch einer der Schweltrommel 10 vorgeschalteten Brennkammer 29 zugeführt. Die die Brennkammer 29 verlassenden Heizgase durchströmen die Schweltrommel 10 und gelangen über einen Heizgasverdichter 30, einen Wäremtauscher 31, in den Kamin 32. Der in der Heizgasleitung 33 dem Kamin vorgeschaltete Wärmetauscher 31 wird von Speisewasser durchströmt. Diese Speisewasserleitung 34 ist in Serie zum Abhitzedampferzeuger 25 der Wärmetauscheranlage 23 geschaltet. Dessen Frischdampf dient in hier nicht weiter dargesteller Weise der internen Energieversorgung der Pyrolyseanlage 1. Ein Teil der Heizgase kann über eine Rezirkulationsleitung 35 in den Rauchgas-Wärmetauscher 26 geleitet und mit der den Luftvorwärmer 27 verlassenden Warmluft vermischt dem Brennerkopf 15 des Gaswandlers 13 zugeführt werden. In der Fig. 1 ist darüber hinaus eine Wasseraufbereitungsanlage 36 an die Gaskühl-und Waschstraße 24 angeschlossen, in der Schadstoffe aus dem Abwasser, vor dessen Einleitung in die öffentliche Kanalisation, entfernt werden können

Beim Betrieb einer solchen vorbekannten Pyrolyseanlage 1 werden die in der Rotorschere 5 zerkleinerten Abfallstoffe über den Vorbunker 6 in die um ihre Längsachse 9 drehende Schweltrommel 10 geleitet und unter ständiger Umwälzung durch die im Gegenstrom strömenden Heizgase aus der der Schweltrommel vorgeschalteten Brennkammer 29 auf 450 bis 500°C aufgeheizt. Die bei dieser Temperatur erzeugten Schwelgase, sowie auch der zurückbleibende Feststoff, der sogenannte Pyrolysereststoff, werden im Staubabscheider 11 voneinander getrennt. Infolge der in der Schweltrommel 10 herrschenden reduzierenden Atmosphäre werden die mit den Abfallstoffen in die Schweltrommel gelangenden Schwermetalle nicht aufoxydiert, sondern in unlöslicher Form an den Schwelkoks gebunden. Auf diese Weise ist der Pyrolysereststoff, dessen Volumen etwa 1/10 des ursprünglichen Müllvolumens beträgt, ohne weiteres deponierfähig. Dagegen enthalten die Schwelgase je nach Zusammensetzung des Mülls, oder der sonstigen zu verschwelenden Einsatzstoffe, Schadstoffe. Diese können bei der nachfolgenden Teilverbrennung im Brennerkopf 15 des Gaswandlers 13 mit einem unterstöchiometrisch sauerstoffhaltigen Gas weitgehend abgebaut und bei der nachfolgenden Durchströmung des rotglühenden Koksbettes 17 des Gaswandlers 13 zu einem im wesentlichen Stickstoff, Kohlenmonoxyd, Wasserstoff und geringe Mengen von Kohlenwasserstoffen enthaltenden Spaltgas abgebaut werden. Dieses Spaltgas wird hinter der Wärmetauscheranlage 23, in der Betriebsdampf, sowie das den Brennerkopf 15 des Gaswandlers 13 zuzuführende sauerstoffhaltige Gasgemisch in den Rauchgaswärmetauscher 26 und Luftvorwärmer 27 aufgeheizt wird, in die mehrstufige Gaskühl-und Waschstraße 24 geleitet. Dort werden Kohlendioxyd sowie chlorhaltige Bestandteile ausgewaschen. Das diese Gaskühl-und Waschstraße 24 entströmende sogenannte Reingas kann nunmehr bedenkenlos weiteren Verbrauchern zugeführt werden. Ein Teil dieses Reingases wird in der Brennkammer 29 mit Luft verbrannt und zur Aufheizung der Schweltrommel 10 verwendet. Dieses Abgas der Brennkammer 29 gibt seine Restwärme nach dem Passieren des Heizgasverdichters 30 in den Wärmetauscher 31 an das Speisewasser für den Abhitzedampferzeuger 25 ab, bevor es über den Kamin 32 in die Atmosphäre entlassen wird.

Bei einer solchen vorbekannten Pyrolyseanlage 1 werden die eingesetzten Abfallstoffe, wie Müll, Klärschlamm und Industrieabfälle in einen Pyrolysereststoff umgewandelt, dessen Volumen etwa 1/10 der ursprünglichen Einsatzstoffe ausmacht und der bedenkenlos deponierfähig ist. Zusätzlich wird über den Umweg des Gaswandlers 13 ein Spaltgas erzeugt, das zu Heizzwecken oder Energiegewinnungszwecken eingesetzt werden kann. Außer den eingesetzten Abfallstoffen wird noch Koks für den Gaswandler 13 und Wasser für die Gaskühl-und Waschstraße 24 benötigt. Dieses Wasser muß über eine Wasseraufbereitungsanlage 36 von Schadstoffen befreit werden, bevor es in das öffentliche Kanalnetz geleitet werden kann. Auch der durch den Gaswandler 13 transportierte und weitgehend ausgebrannte Restkoks kann bedenkenlos deponiert werden.

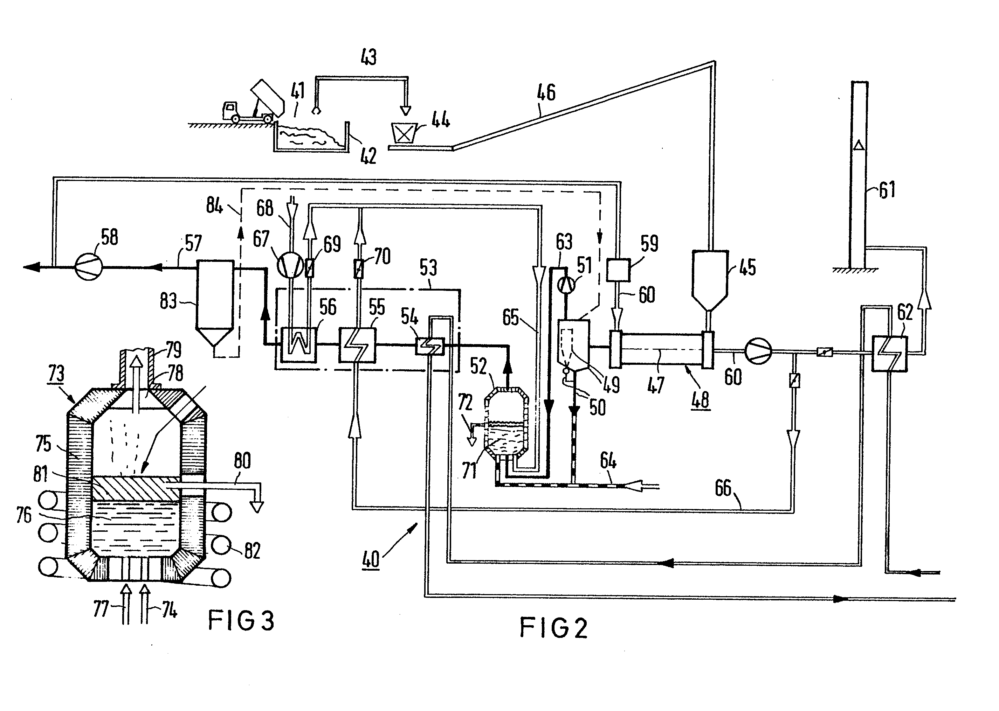

Im Vergleich zur und vorbekannten Pyrolyseanlage 1 zeigt die Fig. 2 eine erfindungsgemäße Pyrolyseanlage 40. Auch diese Pyrolyseanlage 40 besitzt eine Müllannahme 41 mit einem Tiefbunker 42 und einen Müllkran 43 und eine vom Müllkran gespeiste Rotorschere 44 zur Zerkleinerung des angelieferten Mülls sowie ein zu einem Vorbunker 45 führendes Müllförderungssystem 46. Auch hier ist an dem Vorbunker 45 eine um ihre Längsachse 47 rotierende Schweltrommel 48 angeschlossen. Dieser ist wie im Ausführungsbeispiel der Fig. 1 ein Staubabscheider 49 mit nachgeschaltetem Pyrolyserereststoffaustragssystem 50 zur Trennung der Pyrolyserereststoffe vom Schwelgas nachgeschaltet. Abweichend vom Ausführungsbeispiel der Fig. 1 ist jedoch dem Staubabscheider 49 unter Zwischenschaltung eines Schwelgasverdichters 51 gasseitig ein Eisenbadvergaser 52 nachgeschaltet. Diesem Eisenbadvergaser ist wiederum gasseitig eine Wärmetauscheranlage 53 nachgeschaltet. Diese enthält im Ausführungsbeispiel wiederum einen Abhitzedampferzeuger 54, einen Rauchgaswärmetauscher 55 und einen Luftvorwärmer 56. Abweichend vom Ausführungsbeispiel der Fig. 1 kann das diesem Wärmetauscherärmer 56 enthält. Abweichend vom Ausführungsbeispiel der Fig. 1 kann das diesem Wärmetauschersystem entströmende abgekühlte Spaltgas unter Einsparung einer Waschstraße über einen in der Spaltgasleitung 57 eingeschalteten Spaltgasverdichter 58 unmittelbar den Verbrauchern zugeleitet werden. Im Ausführungsbeispiel ist jedoch dem Spaltgasverdichter ein Entstauber 83 vorgeschaltetm dessen Staubabzug über eine Transportleitung 84 an den Staubabscheider 49 angeschlossen ist.

Bei der erfindungsgemäßen Pyrolyseanlage 40 wird wiederum ein Teil des Spaltgases in einer Brennkammer 59 verbrannt und werden in die heißen Rauchgase über eine Heizgasleitung 60 der Schweltrommel 48 zugeführt. Die die Schweltrommel 48 verlassende Heizgasleitung führt auch hier wiederum vor der Einmündung in einen Kamin 61 in einen Wärmetauscher 62 durch den im Gegenstom das Speisewasser für den Abhitzedampferzeuger 54 geleitet wird. Wie anhand der Fig. 2 zu erkennen ist, münden die Schwelgasleitun g 63, eine Brennstoffleitung 64 für der kohlenstoffhaltige Substanzen wie z.B. fein gemehlener Koks - (Körnung kleiner 1 mm ∅) oder Pyrolysereststoffe sowie eine weitere Leitung 65 für ein sauerstoffhaltiges Gasgemisch im Boden des Eisenbadvergasers 52. In der Leitung 65 mündet zuvor eine durch den Wärmetauscher 55 geführte Rauchgasrezirkulationsleitung 66 und eine durch den Luftvorwärmer 56 geführte, mit einem Luftverdichter 67 ausgerüstete Frischluftleitung 68. In diesen ist zur Einstellung des Sauerstoffgehaltes des Gasgemisches je ein Drosselventil 69, 70 eingebaut ist.

Beim Betrieb der erfindungsgemäßen Pyrolyseanlage 40 wird der bei der Müllannahme 41 in der Fig. 2 angelieferte Haus-Industriemüll bzw. Klärschlamm -auch Altreifen -in der Rotorschere 44 zerkleinert und über das Müllförderungssystem 46 der beheizten und sich um ihre Längsachse 47 sich drehenden Schweltrommel 48 zugeführt. In dem der Schweltrommel nachgeschalteten Staubabscheider 49 wird das Schwelgas von den Schwelreststoffen abge trennt und vom Schwelgasverdichter 51 über die Schwelgasleitung 63 in die Eisenschmelze 71 des Eisenbadvergasers 52 eingeblasen. Über die in die Eisenschmelze 71 mündende Brennstoffleitung 64, wird gemahlener Koks, dem als Schadstoffbindemittel gemahlener Kalkstein oder geKoks, dem als Schadstoffbindemittel Kalkstein oder gebrannter Kalk beigemischt wurde, und dem bedarfsweise auch Pyrolysereststoff zugemischt werden kann, zugeführt. Außerdem wird über den dem Luftvorwärmer 56 vorgeschalteten Luftverdichter 67 Verbrennungsluft oder Sauerstoff angesaugt, im Luftvorwärmer aufgeheizt und über die Leitung 65 in die Eisenschmelze 71 eingedüst. Hierdurch erfolgt in der Eisenschmelze eine Aufoxidation des Kohlenstoffes im Koks und im Pyrolysereststoff. Die dabei frei werdende Wärme deckt die Wärmeverluste des Eisenbadvergasers 52. Die Temperatur des Eisenbades läßt sich durch ei Menge des eingabrachten Kohlenstoffs und Sauerstoffs gegebenenfalls auch des Luftsauerstoffs einstellen. Die mit dem Pyrolysereststoff bzw. Koks zugeführten Schadstoffbindemittel -insbesondere Kalkstein -schwimmen als Schlacke auf dem Eisenbad auf und werden von Zeit zu Zeit mitsamt den Schadstoffen über eine Schlackeabzugsleitung 72 abgezogen.

Es ist ein großer Vorteil dieser Pyrolyseanlage 40, daß der technische Aufwand durch den Einsatz eines Eisenbadvergasers 52 anstelle eines Gaswandlers 13 deutlich verringert wird, weil die den Eisenbadvergaser verlassenden Spaltgase bereits Schadstoffrei und unbedenklich verbrennbar sind. Somit machen sie die Nachschaltung einer Waschstraße 24 entbehrlich. Mit der Einsparung der Waschstraße wird aber auch zugleich die hierzu erforderliche Wasseraufbereitungsanlage 36 eingespart. Aber nicht nur hinsichtlich des Investitionsaufwandes bringt diese neue Pyrolyseanlage Vorteile sondern auch hinsichtlich der Betriebskosten. So wird zur Temperaturhaltung des Eisenbades weniger Koks benötigt als sonst Koks im Koksbett eines herkömmlichen Gaswandlers 13 vergleichbarer Leistung verbraucht wird. Darüber hinaus können die Schwelreststoffe den sonst zur Temperierung des Eisenbades erforderlichen Koks weitgehend substituieren. Dadurch brauchen in den meisten Fällen weder Schwelreststoffe noch Restkoks deponiert zu werden. Stattdessen fällt eine vergleichsweise geringe Menge Schlacke an. Die Fig. 3 zeigt einen gegenüber dem Ausführungsbeispiel der Fig. 2 etwas abgewandelten Eisenbadvergaser 73. Auch hier ist eine Schwelgasleitung 74 am Boden des Eisenbadvergasers angeschlossen. Sie führt durch die Schamottierung 75 in die Eisenschmelze 76. Neben der Schwelgasleitung 74 mündet in gleicher Weise eine Leitung 77 für die Zuführung von Schadstoffbindemitteln und ggfs. auch von Pyrolysereststoffen. In der oberen Kalotte des Eisenbadvergasers 73 befindet sich ein Spaltgasauslaß 78, an den eine Spaltgasleitung 79 angeflanscht ist. In einer der Seitenwände des Eisenbadvergasers 73 ist unmittelbar über dem Spiegel der Eisenschmelze 76 ein Ablaß 80 für die auf dem Eisenbad schwimmende, die Schadstoffe enthaltende Schlacke 81 vorgesehen. Der die Eisenschmelze 76 beherbergende untere Abschnitt des Eisenbadvergaser 73 ist von der Wicklung 82 einer Induktionsheizung umschlossen.

Anders als im Ausführungsbeispiel der Fig. 2 werden die Temperaturverluste der Eisenschmelze 76 nicht durch Zugabe von Koks und Oxydationsmitteln sondern über die Induktionsheizung ausgeglichen. Das hat zur Folge, daß kein Sauerstoff in die Eisenschmelze eingebracht zu werden braucht. Lediglich bei der Zugabe von Pyrolysereststoffen kann zur Verringerung der zu deponierenden Mengen eine geringfügige Eindüsung von Sauerstoff in das Eisenbad erfolgen. Der Hauptvorteil dieser Maßnahme liegt in der Energieeinsparung durch Ausnutzung der chemischen Energie, die bei der Oxydation des Kohlenstoffes des Pyrolysereststoffes frei wird. Die dabei durch Oxydation der Pyrolysereststoffe zusätzlich erzeugte Wärme führt gleichzeitig zur Einsparung von elektrischer Heizenergie.

Bezugszeichenliste

Pyrolseanlage 1
Müllannahme 2
Tiefbunker 3
Müllkran 4
Rotorschere 5
Vorbunker 6
Müllförderungssytem 7
Einfüllschacht 8
Längsachse 9
Schweltrommel 10
Staubabscheider 11
Reststoffaustragssystem 12
Geswandler 13
Gehäuse 14
Brennerkopf 15
Rost 16
Koksbett 17
Kokszuführungsleitung 18

Ascheabzugsleitung 19
Schwelgasleitung 20
Gasleitung 21
Spaltgasleitung 22
Wärmetauscheranlage 23
Gaskühl-und Waschstraße 24
Abhitzedampferzeuger 25
Rauchgaswärmetauscher 26
Luftvorwärmer 27
Spaltgasverdichter 28
Brennkammer 29
Heizgasverdichter 30
Wärmetauscher 31
Kamin 32
Heizgasleitung 33
Speisewasserleitung 34
Rezirkulationsleitung 35
Wasseraufbereitungsanlage 36
Pyrolyseanlage 40
Müllannahme 41
Tiefbunker 42
Müllkran 43
Rotorschere 44
Vorbunker 45
Müllförderungssystem 46
Längsachse 47
Schweltrommel 48
Staubabscheider 49
Pyrolysereststoffaustragssystem 50
Schwelgasverdichter 51
Eisenbadvergaser 52
Wärmetauscheranlage 53
Abhitzedampferzeuger 54
Rauchgaswärmetauscher 55
Luftvorwärmer 56
Spaltgasleitung 57
Spaltgasverdichter 58
Brennkammer 59
Heizgasleitung 60
Kamin 61
Wärmetauscher 62
Schwelgasleitung 63
Brennstoffleitung 64
Leitung 65
Rauchgasrezirulationsleitung 66
Luftverdichter 67
Frischluftleitung 68
Drosselventil 69, 70
Eisenschmelze 71
Schlackenabzugsleitung 72
Eisenbadvergaser 73
Schwelgasleitung 74
Schamottierung 75
Eisenschmelze 76
Leitung 77
Spaltgasauslaß 78
Spaltgasleitung 79
Ablaß 80

Schlacke 81
Wicklung 82
Entstauber 83
Transportleitung 84

## Ansprüche

Pyrolyseanlage mit einer Schweleinrichtung zur Verschwelung der Einsatzstoffe zu einem sogenannten Pyrolyse-Restkoks und einem Schwelgas und einem der Schwelreinrichtung gasseitig nachgeschalteten Gaswandler zur. Umwandlung des Schwelgases in ein bedenkenlos verfeuerbares Spaltgas,

**Dadurch gekennzeichnet,**

daß der Gaswandler ein Eisenbadvergaser (52, 73) ist, dem zur Temperierung Energie zugeführt wird und in dessen flüssige Eisenschmelze (71, 76) Schwelgas eingedüst und Schadstoff-Bindemittel eingebracht werden.
     2. Pyrolyseanlage nach Anspruch 1,

**Dadurch gekennzeichnet ,**

daß der Eisenschmelze (76) auf elektrischem Wege (82) Heizenergie zugeführt wird.
     3. Pyrolyseanlage nach Anspruch 2,

**dadurch gekennzeichnet,**

daß der Eisenschmelze (76) Wärme über eine Induktionsheizung (82) zugeführt wird.
     4. Pyrolyseanlage nach Anspruch 1,

**dadurch gekennzeichnet,**

daß der Eisenschmelze (71) auf chemischem Wege (64, 65) Energie zugeführt wird.

     5. Pyrolyseanlage nach Anspruch 4,

**dadurch gekennzeichnet,**

daß die Eisenschmelze durch Verbrennung eines Teils des gebildeten Spaltgases erwärmt wird.
     6. Pyrolyseanlage nach Anspruch 5,

**gekennzeichnet durch,**

eine indirekte Beheizung des Eisenbades.
     7. Pyrolyseanlage nach Anspruch 4,

**dadurch gekennzeichnet,**

daß der Eisenschmelze (71) Kohlenstoff und Sauerstoff bzw. Luft zugeführt wird.
     8. Pyrolyseanlage nach Anspruch 7,

**dadurch gekennzeichnet**

daß der Eisenschmelze (71) gemahlenen Koks zugeführt wird.
     9. Pyrolyseanlage nach Anspruch 7,

**dadurch gekennzeichnet,**

daß der Eisenschmelze (71) Schwelreststoffe zugeführt werden.
     10. Pyrolyseanlage nach Anspruch 1,

**dadurch gekennzeichnet,**

daß verunreinigte Fremdgase zur thermischen Zerstörung bzw. chemischen Einbindung von mitgeführten Schadstoffen in die Eisenschmelze einleitbar sind.

FIG1

0 208 881

FIG 3

FIG 2

0 208 881

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE-B-2 304 369 (MANNESMANN)<br>* Ansprüche 1-17; Figuren 1,2 * | 1-10 | C 10 B 53/00<br>C 10 K 3/00<br>C 10 G 9/34 |
| | --- | | |
| A | US-A-4 142 867 (KIENER)<br>* Amspruch 1; Figuren 1-3 * | 1 | |
| | --- | | |
| A | DE-C- 317 269 (GOERIZ)<br>* Ansprüche 1-4 * | 1-10 | |
| | --- | | |
| A | DE-A-3 148 550 (HAMBURGER STAHLWERKE)<br>* Anspruch 1 * | 1-10 | |
| | ----- | | |

| RECHERCHIERTE SACHGEBIETE (Int. Cl.4) |
|---|
| C 10 B<br>C 10 K<br>C 10 G<br>C 02 F |

Der vorliegende Recherchenbericht wurde für alle Patentansprüche erstellt.

| Recherchenort | Abschlußdatum der Recherche | Prüfer |
|---|---|---|
| DEN HAAG | 07-10-1986 | MEERTENS J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82